# EUROPÄISCHE PATENTANMELDUNG

(11) **EP 0 715 290 A1**
(43) Veröffentlichungstag der Anmeldung: **05.06.1996**
(21) Anmeldenummer: 95250281.3
(22) Anmeldetag: 20.11.1995
(51) Int. Cl.: G08G 1/0968, G01C 21/20

(54) **Verfahren und System zur Routenplanung**

(30) Priorität: 28.11.1994 DE 4444392; 11.09.1995 DE 19534589
(71) Anmelder: MANNESMANN Aktiengesellschaft, D-40213 Düsseldorf (DE)
(72) Erfinder: Kyek, Olaf, Dipl.-Inform., D-46535 Dinslaken (DE); Meis, Josef, Dipl.-Math., D-48147 Münster (DE); Schlottbom, Karlheinz, Dipl.-Math., D-40885 Ratingen (DE); Sievers, Christel, D-47804 Krefeld (DE)
(74) Vertreter: Meissner, Peter E., Dipl.-Ing.

(57) **Zusammenfassung**

Die Erfindung betrifft ein Verfahren zur Fahrtroutenplanung, insbesondere zur Zielführung von Fahrzeugen, bei dem an einzelnen Orten oder Streckenabschnitten eines Straßennetzes ermittelte Verkehrszustandsdaten, die Informationen über den Verkehrszustand in mindestens einer Fahrtrichtung enthalten, an einen Verkehrsrechner, der eine digitale Straßenkarte aufweist, übertragen und von dem Verkehrsrechner zur Ermittlung mindestens einer günstigen Fahrtroute herangezogen werden. Erfindungsgemäß leitet der Verkehrsrechner anhand von erfaßten Verkehrszustandsdaten in Abhängigkeit von ermittelten und/oder vorgebbaren Eingangsparametern parameterabhängige Verkehrszustandsmuster für mindestens einige der Orte oder Streckenabschnitte des Straßennetzes ab und speichert sie, prognostiziert zukünftige Verkehrszustände und ermittelt anhand der digitalen Straßenkarte unter Berücksichtigung der prognostizierten Verkehrszustände wenigstens eine günstige Fahrtroute von einer Start- zu einer Zielposition. Die Erfindung betrifft ferner ein System zur Durchführung des Verfahrens.

## Beschreibung

Die Erfindung betrifft ein Verfahren und System zur Fahrtroutenplanung, insbesondere zur Zielführung von Fahrzeugen, bei dem an einzelnen Orten oder Streckenabschnitten eines Straßennetzes ermittelte Verkehrszustandsdaten, die Informationen über den Verkehrszustand in mindestens einer Fahrtrichtung enthalten, an einen Verkehrsrechner, der eine digitale Straßenkarte aufweist, übertragen und von dem Verkehrsrechner zur Ermittlung mindestens einer günstigen Fahrtroute herangezogen werden.

Aus der WO 89/02142 ist ein System zur optimalen Nutzung eines Straßennetzes bekannt, das an ausgewählten Orten oder Streckenabschnitten über mindestens einen Aufnahmesensor verfügt, der den Verkehrszustand, insbesondere die Verkehrsdichte, und den Straßenzustand erfaßt. Die erfaßten Verkehrsdaten werden anschließend an eine Leitstelle, welche ein Verkehrsrechner sein kann, übertragen. In der Leitstelle erfolgt die Verarbeitung und Aufbereitung der Verkehrsdaten, die anschließend insbesondere zur direkten Verkehrslenkung verwendet werden, beispielsweise durch direkte Information des Autofahrers. Die Verkehrslenkung erfolgt dabei auf der Grundlage eines Soll-lst-Vergleichs der Verkehrsdaten von ausgewählten Orten oder Streckenabschnitten. Die Soll-Werte entsprechen dabei beispielsweise dem optimalen Verkehrszustand auf dem entsprechenden Streckenabschnitt des Straßennetzes. Zur differenzierteren Erfassung der Verkehrsströme werden die an verschiedenen Orten ermittelten Verkehrsdaten zweier Meßstellen z.B. einer Korrelationsanalyse unterworfen, um daraus zusätzliche Aussagen u.a. über die Verkehrsströme zu erhalten.

Nachteilig ist bei diesem System zur optimalen Nutzung eines Straßennetzes und damit zur Ermittlung günstiger Fahrtrouten von einer Start- zu einer Zielposition, daß insbesondere nur die aktuellen Verkehrszustandsdaten und der aktuelle Straßenzustand herangezogen werden können. Die so ermittelten günstigen Fahrtrouten sind besonders bei längeren Fahrtzeiten mit relativ großer Unsicherheit behaftet, da der aktuelle Verkehrszustand über größere Zeiträume (z.B. mehrere Stunden) im Regelfall starken Änderungen unterworfen ist.

Es ist **Aufgabe** der vorliegenden Erfindung, ein Verfahren und ein System anzugeben, das die Ermittlung einer auch über einen größeren Zeitraum günstigen Fahrtroute von einer Start- zu einer Zielposition ermöglicht und dadurch insbesondere eine effektivere Verkehrslenkung und Zielführung von Fahrzeugen gestattet.

Die **Lösung** dieser Aufgabe hinsichtlich des Verfahrens ist erfindungsgemäß gekennzeichnet durch die im kennzeichnenden Teil des Patentanspruchs 1 angegebenen Merkmale. Durch die kennzeichnenden Merkmale der Unteransprüche 2 bis 10 ist dieses Verfahren in vorteilhafter Weise weiter ausgestaltbar. Ein System zur Durchführung des erfindungsgemäßen Verfahrens weist die Merkmale des Patentanspruches 11 auf; durch die kennzeichnenden Merkmale der Unteransprüche 12 bis 14 ist dieses System in vorteilhafter Weise weiter ausgestaltbar.

Die Erfindung sieht vor, daß ein Verkehrsrechner anhand von erfaßten Verkehrszustandsdaten in Abhängigkeit von ermittelten und/oder vorgebbaren Eingangsparametern parameterabhängige Verkehrszustandsmuster (im Sinne einer Klassifizierung) für mindestens einige der Orte oder Streckenabschnitte des Straßennetzes ableitet und speichert. Anschließend bestimmt (prognostiziert) der Verkehrsrechner ausgehend von den aktuell erfaßten Verkehrszuständen und den in der Vergangenheit abgeleiteten parameterabhängigen Verkehrszustandsmustern zukünftige Verkehrszustände. Schließlich ermittelt der Verkehrsrechner anhand der digitalen Straßenkarte unter Berücksichtigung der prognostizierten Verkehrszustände wenigstens eine günstige Fahrtroute von einer Start- zu einer Zielposition. Die so ermittelte Fahrtroute beruht nicht auf lediglich vorübergehend zutreffenden Momentanwerten sondem auf einer voraussichtlich deutlich näher an der eintretenden Wirklichkeit liegenden Prognose der zukünftigen Verkehrszustände, so daß unter Berücksichtigung der mittleren Fahrzeuggeschwindigkeit eine nahezu optimale Zielführung verwirklicht werden kann.

Besonders zweckmäßig ist es, wenn der Verkehrsrechner die parameterabhängigen Verkehrszustandsmuster für jeweils verschiedene Zeitparameter ableitet, aufgeschlüsselt nach Zeiffenstern innerhalb eines Tages, nach Wochentagen, Feiertagen und Jahreszeiten.

Eine günstige Fahrtroute läßt sich insbesondere dann ermitteln, wenn die parameterabhängigen Verkehrszustandsmuster die Verkehrsdichte, die mittlere Fahrzeuggeschwindigkeit und/oder sonstige Verkehrsleitwerte (z.B. die im Regelfall erzielbare Geschwindigkeit) umfassen.

Für eine sichere Fahrtroutenplanung ist es vorteilhaft, wenn die ermittelten Eingangsparameter die Witterungsverhältnisse, z.B. Regen, Schnee usw., umfassen.

Vorteilhafterweise sollten die vorgebbaren Eingangsparameter auch behördliche Beschränkungen für bestimmte Abschnitte des Straßennetzes berücksichtigen.

Mit Vorteil wird vorgeschlagen, daß der Verkehrsrechner die parameterabhängigen Verkehrszustandsmuster mittels statistischer Rechenalgorithmen ableitet, weil gerade dadurch zufällige statistische Schwankungen angemessen berücksichtigt werden können.

Besonders vorteilhaft ist es, wenn der Verkehrsrechner die tatsächlich eingetretenen parameterabhängigen Verkehrszustände mit den prognostizierten Verkehrszuständen vergleicht und die statistischen Rechenalgorithmen zur Prognose bei Abweichungen entsprechend korrigiert. Dabei werden zweckmäßigerweise die entsprechenden Parameter der Rechenalgorithmen sukzessive verändert und an die wirklichen Verkehrszustandsschwankungen angepaßt. Man erhält auf diese Weise gleichzeitig sich selbsttätig aktualisierende Rechenalgorithmen.

Um den zeitlichen Zusammenhang benachbarter typischer Verkehrszustände besser zu erfassen und damit handhabbarer zu machen, wird mit der Erfindung vorgeschlagen, daß der Verkehrsrechner jeweils einen typischen zeitlichen Übergang von jeweils einem der parameterabhängigen prognostizierten Verkehrszustände eines Orts oder Streckenabschnitts zu einem der parameterabhängigen prognostizierten Verkehrszustände des unmittelbar benachbarten Orts oder Streckenabschnitts bestimmt und zur Ermittlung einer günstigen Fahrtroute heranzieht.

Zweckmäßigerweise werden die aktuell erfaßten Verkehrszustände eines Ortes oder Streckenabschnitts den prognostizierten Verkehrszuständen in Abhängigkeit von den Parametern in Form einer Tabelle zugeordnet, da diese auch rechentechnisch leicht handhabbar ist.

Eine sehr schnelle und unkomplizierte Ermittlung der Prognosen ergibt sich, wenn die prognostizierten parameterabhängigen Verkehrszustände aus den aktuellen Verkehrszuständen in Abhängigkeit von den Eingangsparametern mittels Fuzzy-Logik ermittelt werden.

Ein System zur Durchführung des Verfahrens enthält einen Verkehrsrechner, der mindestens mit einer digitalen Straßenkarte sowie einem elektronischen Speicher zur Speicherung von Daten ausgestattet ist. Darüber hinaus verfügt der Verkehrsrechner über eine Zuordnungseinrichtung zur Zuordnung von parameterabhängigen Verkehrszustandsmustern für mindestens einige der Orte oder Streckenabschnitte des Straßennetzes in Abhängigkeit von ermittelten und/oder vorgebbaren Eingangsparametern, eine Prognoseeinrichtung zur Prognose zukünftiger Verkehrszustände, ausgehend von den aktuell erfaßten Verkehrszuständen und den in der Vergangenheit abgeleiteten parameterabhängigen Verkehrszustandsmustern, eine Fahrtroutenermittlungseinrichtung zur Ermittlung wenigstens einer günstigen Fahrtroute von einer Start- zu einer Zielposition anhand der digitalen Straßenkarte unter Berücksichtigung der prognostizierten Verkehrszustände, und Mittel zur Erfassung und Übertragung von Verkehrszustandsdaten, die Informationen über den Verkehrszustand in mindestens einer Fahrtrichtung enthalten, an den Verkehrsrechner.

Bei einer alternativen Ausführungsform der Erfindung sind die Mittel zur Erfassung und Übertragung von Verkehrszustandsdaten in sich im Straßenverkehr mitbewegenden Fahrzeugen installiert sind, insbesondere in den Fahrzeugen einer speziellen organisatorischen Einheit (z.B. Mietwagenflotte).

Zweckmäßigerweise weisen die sich im Straßenverkehr mitbewegenden Fahrzeugen einen Empfänger für ein Navigations-Satellitensystem zur Bestimmung der aktuellen Ortsposition auf.

Darüber hinaus sollten die Mittel zur Erfassung und Übertragung von Verkehrszustandsdaten eine Empfangseinrichtung zum Empfang von Anforderungen des Verkehrsrechners zur Datenübertragung aufweisen, um gezielt abgefragt werden zu können, was beispielsweise bei starker Belastung der Übertragungskanäle von Vorteil ist.

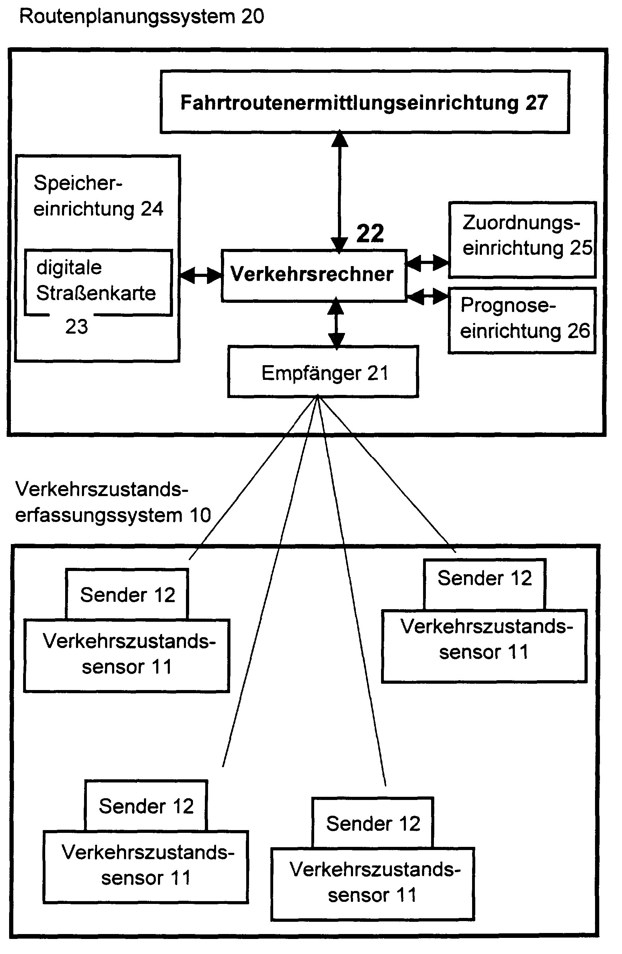

Anhand des in der einzigen Figur dargestellten Systems zur Fahrtroutenplanung, insbesondere zur Zielführung von Fahrzeugen, wird die Erfindung nachfolgend exemplarisch näher erläutert.

Das System zur Durchführung des Verfahrens zur Routenplanung umfaßt im wesentlichen zwei Teilsysteme: ein Verkehrszustandserfassungssystem 10 und ein Routenplanungssystem 20. Das Verkehrszustandserfassungssystem enthält eine Vielzahl innerhalb eines Straßennetzes räumlich verteilt angeordneter Mittel 11 zur Erfassung von Verkehrszustandsdaten, sogenannte Verkehrszustandssensoren 11. Die Verkehrszustandssensoren 11 ermöglichen es, die mittlere Geschwindigkeit der Fahrzeuge, die Verkehrsdichte, Witterungsverhältnisse usw. zu erfassen. Installiert sind die Verkehrszustandssensoren 11 vorzugsweise ortsfest an wichtigen Orten oder Streckenabschnitten des Straßennetzes. Zur Übertragung der Verkehrszustandsdaten sind die Verkehrszustandssensoren 11 jeweils mit einem Sender 12 versehen. Als Gegenstück dazu verfügt das Routenplanungssystem 20 über einen entsprechenden Empfänger 21 zum Empfang der Verkehrszustandsdaten der Verkehrszustandssensoren 11. Der Empfänger 21 ist datentechnisch direkt mit einem Verkehrsrechner 22 verbunden. Zur Abspeicherung der übermittelten Verkehrszustandsdaten verfügt der Verkehrsrechner 22 über eine elektronische Speichereinrichtung 24. Dabei sind beispielsweise in einem Teilbereich des Speichers der Speichereinrichtung 24 die Daten der digitalen Straßenkarte 23 abgelegt. Die einzelnen Straßenabschnitte der digitalen Straßenkarte 23 sind außerdem mit Verkehrszustandsattributen belegbar. Die Klassifizierung der Verkehrszustandsdaten erfolgt in der vom Verkehrsrechner 22 gesteuerten Zuordnungseinrichtung 25. Die Zuordnungseinrichtung 25 kann selbst über einen Mikrorechner zur Durchführung der Verkehrszustandsdatenklassifizierung verfügen. Die klassifizierten Verkehrszustandsmuster, die parameterabhängig sind, sind vom Verkehrsrechner 22 in der Speichereinrichtung 24 ablegbar. Zur Prognose zukünftiger typischer Verkehrszustände weist der Verkehrsrechner 22 eine Prognoseeinrichtung 26 auf, wobei die prognostizierten Verkehrszustände in der Speichereinrichtung 24 zur Ablage kommen. Eine Fahrtroutenermittlungseinrichtung 27, die mit dem Verkehrsrechner 22 verbunden und von diesem steuerbar ist, ermöglicht die Bestimmung günstiger Fahrtrouten von einer Start- zu einer Zielposition, unter Berücksichtigung der in der Speichereinrichtung 24 abgelegten aktuellen und prognostizierten Verkehrszustände. Zur Durchführung der Fahrtroutenplanung hat die Fahrtroutenermittlungseinrichtung 27 außerdem Zugriff auf die digitale Straßenkarte 23 und die den Straßenabschnitten zugeordneten Verkehrszustandsattribute. Auch die Fahrtroutenermittlungseinrichtung 27 kann mit einem separaten Mikrorechner versehen sein.

Die Vorbereitung der Durchführung der Fahrtroutenplanung erfolgt so, daß die Verkehrszustandssensoren 11 die verschiedensten Verkehrszustandsdaten erfassen und an den Verkehrsrechner 22 übertragen. Die Verkehrszustandsdaten werden dabei mit den entsprechenden Kennungen versehen übermittelt. Die Kennungen enthalten u.a. die Ortsposition oder die Kennummer des Verkehrszustandssensors 11 sowie den Zeitpunkt oder Zeitbereich der Erfassung der Verkehrszustandsdaten. Der Verkehrsrechner 22 führt die empfangenen Verkehrszustandsdaten der Zuordnungseinrichtung 25 zu. Dies kann direkt oder nach Zwischenspeicherung in der Speichereinrichtung 24 erfolgen. Die Zuordnungseinrichtung 25 ermittelt anhand der in der Vergangenheit erfaßten Verkehrszustandsdaten Verkehrszustandsmuster in Abhängigkeit von ermittelten oder vorgegebenen Eingangsparametern. Die Klassifizierung der Verkehrszustandsdaten in Form von parameterabhängigen Verkehrszustandsmustern wird vom Verkehrsrechner 22 laufend überprüft und aktualisiert, so daß die Klasseneinteilung auch langfristige Verkehrszustandsänderungen erfaßt. Um zufällige, statistische Schwankungen ausreichend zu berücksichtigen, erfolgt die Klassifizierung der Verkehrszustandsdaten mittels statistischer Rechenalgorithmen. Die Abweichung der einzelnen Verkehrszustandsdaten wird dabei durch die entsprechende mittlere Schwankungsbreite erfaßt. Für die Routenplanung hat es sich als besonders zweckmäßig erwiesen, außerdem jeweils die Übergänge von jeweils einem der parameterabhängigen Verkehrszustände eines Ortes oder Streckenabschnittes zu einem der parameterabhängigen Verkehrszustände des unmittelbar benachbarten Orts- oder Streckenabschnitts zu bestimmen, d. h. die erste Ableitung nach dem Ort zu ermitteln. Diese Übergänge spiegeln vereinfacht den Zusammenhang der an einzelnen Orten oder Streckenabschnitten bestimmten Verkehrszustände wider. Auch bei den typischen Übergängen handelt es sich um parameterabhängige Verkehrsinformationen.

Zweckmäßigerweise werden die Verkehrszustandsmuster parameterabhängig bestimmt. So werden die Verkehrszustandsmuster zweckmäßigerweise für folgende Zeitparameter abgeleitet: Zeiffenster innerhalb eines Tages, Wochentage, Feiertage und Jahreszeiten. Selbstverständlich können auch weitere Zeitparameter berücksichtigt werden, insbesondere wenn häufig zu bestimmten Zeiten spezifische Verkehrszustandssituationen (z.B. bei Großveranstaltungen wie Messen usw.) vorliegen. Mit "Zeiffenster innerhalb eines Tages" ist die Zerlegung der vierundzwanzig Stunden eines Tages in gleichlange oder je nach Tageszeit unterschiedlich lange Zeitbereiche gemeint, z.B. könnte ein einzelnes Zeiffenster die Zeit zwischen 12 und 14 Uhr umfassen. Als ermittelbare Eingangsparameter können die Witterungsverhältnisse in den Verkehrszustandsmustern berücksichtigt werden. Die parameterabhängigen Verkehrszustandsmuster selbst sollten die Verkehrsdichte, die mittlere Fahrzeuggeschwindigkeit und/oder sonstige Verkehrsleitwerte umfassen. Dabei ist die im Mittel erzielbaren Geschwindigkeit auf diesem Straßenabschnitt des Straßennetzes in der entsprechenden Richtung ein Verkehrsleitwert, eine vorgeschriebene Mindestgeschwindigkeit ein anderer. Vorgebbare Eingangsparameter der Verkehrszustandsmuster sind beispielsweise behördliche Beschränkungen für bestimmte Abschnitte des Straßennetzes, z.B. zeitweilige Geschwindigkeitsbegrenzungen und dergleichen.

Zur Routenplanung werden die aktuellen Verkehrszustandsdaten vom Verkehrsrechner 22 an die Zuordnungseinrichtung 25 übergeben, die den Verkehrszustandsdaten jeweils eines Orts oder Straßenabschnittes in Abhängigkeit von ermittelten und vorgegebenen Parametern einen Verkehrszustand zuordnet. Auf der Grundlage der so ermittelten aktuellen Verkehrszustände bestimmt anschließend die Prognoseeinrichtung 26 mögliche zukünftige Verkehrszustände. Dies kann beispielsweise dadurch geschehen, daß die aktuellen parameterabhängigen Verkehrszustände mittels Fuzzy-Logik prognostizierten parameterabhängigen Verkehrszuständen zugeordnet werden. Diese Zuordnung kann aber auch über in Tabellen abgelegten Ist- und Prognosewerten erfolgen, wobei auch hier die tabellarische Zuordnung parameterabhängig erfolgt.

Ausgehend von einer Startposition ermittelt der Verkehrsrechner schließlich anhand der aktuellen und prognostizierten Verkehrszustände mindestens eine günstige Fahrtroute. Bei der Berechnung spielen die Verkehrsleitwerte eine wesentliche Rolle, da der Verkehrsrechner anhand der Verkehrsleitwerte, die die erzielbare Geschwindigkeit beinhalten, den Zeitpunkt berechnen kann, an dem sich ein Fahrzeug oder eine Fahrzeugkolonne an einem bestimmten Ort oder Streckenabschnitt der Fahrtroute befinden wird. Ort und Zeitpunkt bestimmen aber in Abhängigkeit von den ermittelten und/oder vorgegebenen Parametern den zu berücksichtigenden Verkehrszustand. Diese Verfahrensweise ermöglicht es, eine günstige Fahrtroute auch für längere Fahrt unter Berücksichtigung von prognostizierten Verkehrszuständen zu ermitteln.

Zur ständigen Verbesserung und Aktualisierung der Rechenalgorithmen zur Prognose der parameterabhängigen Verkehrszustandsmuster werden die prognostizierten Verkehrszustände mit den zum Prognosezeitpunkt vorliegenden Verkehrszuständen verglichen. Überschreitet dabei die gewichtete Gesamtabweichung einen vorgegebenen Toleranzwert, so werden die zur Prognose verwendeten Rechenalgorithmen entsprechend nach oben oder unten korrigiert, indem die entsprechenden Rechenparameter der Algorithmen entsprechend verkleinert bzw. vergrößert werden.

### Bezugszeichenliste:

| | |
|---|---|
| Verkehrszustandserfassungssystem | 10 |
| Verkehrszustandssensor | 11 |
| Sender | 12 |
| | |
| Routenplanungssystem | 20 |
| Empfänger | 21 |
| Verkehrsrechner | 22 |
| digitale Straßenkarte | 23 |
| Speichereinrichtung | 24 |
| Zuordnungseinrichtung | 25 |
| Prognoseeinrichtung | 26 |
| Fahrtroutenermittlungseinrichtung | 27 |

## Patentansprüche

1. Verfahren zur Fahrtroutenplanung, insbesondere zur Zielführung von Fahrzeugen, bei dem an einzelnen Orten oder Streckenabschnitten eines Straßennetzes ermittelte Verkehrszustandsdaten, die Informationen über den Verkehrszustand in mindestens einer Fahrtrichtung enthalten, an einen Verkehrsrechner, der eine digitale Straßenkarte aufweist, übertragen und von dem Verkehrsrechner zur Ermittlung mindestens einer günstigen Fahrtroute herangezogen werden,
**dadurch gekennzeichnet,**
daß der Verkehrsrechner anhand von erfaßten Verkehrszustandsdaten in Abhängigkeit von ermittelten und/oder vorgebbaren Eingangsparametern parameterabhängige Verkehrszustandsmuster für mindestens einige der Orte oder Streckenabschnitte des Straßennetzes ableitet und speichert,
daß der Verkehrsrechner ausgehend von den aktuell erfaßten Verkehrszuständen und den in der Vergangenheit abgeleiteten parameterabhängigen Verkehrszustandsmustern zukünftige Verkehrszustände prognostiziert und
daß der Verkehrsrechner anhand der digitalen Straßenkarte unter Berücksichtigung der prognostizierten Verkehrszustände wenigstens eine günstige Fahrtroute von einer Start- zu einer Zielposition ermittelt.

2. Verfahren nach Anspruch 1,
**dadurch gekennzeichnet,**
daß der Verkehrsrechner die parameterabhängigen Verkehrszustandsmuster für jeweils verschiedene Zeitparameter ableitet, aufgeschlüsselt nach Zeiffenstern innerhalb eines Tages, nach Wochentagen, Feiertagen und Jahreszeiten.

3. Verfahren nach Anspruch 1 oder 2,
**dadurch gekennzeichnet,**
daß die parameterabhängigen Verkehrszustandsmuster die Verkehrsdichte, die mittlere Fahrzeuggeschwindigkeit und/oder sonstige Verkehrsleitwerte umfassen.

4. Verfahren nach einem der Ansprüche 1 bis 3
**dadurch gekennzeichnet,**
daß die ermittelten Eingangsparameter die Witterungsverhältnisse umfassen.

5. Verfahren nach einem der Ansprüche 1 bis 4
**dadurch gekennzeichnet,**
daß die vorgebbaren Eingangsparameter behördliche Beschränkungen für bestimmte Abschnitte des Straßennetzes umfassen.

6. Verfahren nach einem der Ansprüche 1 bis 5
**dadurch gekennzeichnet,**
daß der Verkehrsrechner die parameterabhängigen Verkehrszustandsmuster mittels statistischer Rechenalgorithmen ableitet.

7. Verfahren nach einem der Ansprüche 1 bis 6
**dadurch gekennzeichnet,**
daß der Verkehrsrechner die tatsächlich eingetretenen parameterabhängigen Verkehrszustände mit den prognostizierten Verkehrszuständen vergleicht und die statistischen Rechenalgorithmen zur Prognose bei Abweichungen entsprechend korrigiert.

8. Verfahren nach einem der Ansprüche 1 bis 7
**dadurch gekennzeichnet,**
daß der Verkehrsrechner jeweils einen typischen zeitlichen Übergang von jeweils einem der parameterabhängigen prognostizierten Verkehrszustände eines Orts oder Streckenabschnitts zu einem der parameterabhängigen prognostizierten Verkehrszustände des unmittelbar benachbarten Orts oder Streckenabschnitts bestimmt und zur Ermittlung einer günstigen Fahrtroute heranzieht.

9. Verfahren nach einem der Ansprüche 1 bis 8
**dadurch gekennzeichnet,**
daß die aktuell erfaßten Verkehrszustände eines Ortes oder Streckenabschnitts den prognostizierten Verkehrszuständen in Abhängigkeit von den Parametern in Form einer Tabelle zugeordnet werden.

10. Verfahren nach einem der Ansprüche 1 bis 8
**dadurch gekennzeichnet,**
daß die prognostizierten parameterabhängigen Verkehrszustände den aktuellen Verkehrszuständen in Abhängigkeit von den Parametern mittels Fuzzy-Logik zugeordnet werden.

11. System zur Durchführung des Verfahrens nach Anspruch 1, enthaltend einen Verkehrsrechner, der mindestens eine digitale Straßenkarte sowie einen elektronischen Speicher zur Speicherung von Daten aufweist, mit einer Zuordnungseinrichtung zur Zuordnung von parameterabhängigen Verkehrszustandsmustern für mindestens einige der Orte oder Streckenabschnitte des Straßennetzes in Abhängigkeit von ermittelten und/oder vorgebbaren Eingangsparametern,
einer Prognoseeinrichtung zur Prognose zukünftiger Verkehrszustände, ausgehend von den aktuell erfaßten Verkehrszuständen und den in der Vergangenheit abgeleiteten parameterabhängigen Verkehrszustandsmustern, einer Fahrtroutenermittlungseinrichtung zur Ermittlung wenigstens einer günstigen Fahrtroute von einer Start- zu einer Zielposition anhand der digitalen Straßenkarte unter Berücksichtigung der prognostizierten Verkehrszustände, und
Mittel zur Erfassung und Übertragung von Verkehrszustandsdaten, die Informationen über den Verkehrszustand in mindestens einer Fahrtrichtung enthalten, an den Verkehrsrechner.

12. System nach Anspruch 11,
**dadurch gekennzeichnet,**
daß die Mittel zur Erfassung und Übertragung von Verkehrszustandsdaten in sich im Straßenverkehr mitbewegenden Fahrzeugen installiert sind.

13. System nach Anspruch 11 oder 9,
**dadurch gekennzeichnet,**
daß die sich im Straßenverkehr mitbewegenden Fahrzeuge einen Empfänger für ein Navigations-Satellitensystem zur Bestimmung der aktuellen Ortsposition aufweisen.

14. System nach einem der Ansprüche 11 bis 10,
**dadurch gekennzeichnet,**
daß die Mittel zur Erfassung und Übertragung von Verkehrszustandsdaten eine Empfangseinrichtung zum Empfang von Anforderungen des Verkehrsrechners zur Datenübertragung aufweisen.
